# EUROPEAN PATENT APPLICATION

(11) **EP 1 830 355 A1**
(43) Date of publication of application: **05.09.2007**
(21) Application number: 05809197.6
(22) Date of filing: 24.11.2005
(51) Int. Cl.: G11B 7/24, G02B 5/22, G02B 5/28, G03H 1/02

(54) **OPTICAL RECORDING MEDIUM FILTER, OPTICAL RECORDING MEDIUM, ITS MANUFACTURING METHOD, OPTICAL RECORDING METHOD, AND OPTICAL REPRODUCING METHOD**

(30) Priority: 03.12.2004 JP 2004352084
(71) Applicant: FUJIFILM Corporation, Minato-ku Tokyo 106-8620 (JP)
(72) Inventor: KAMADA, Kou, nomiya-shi, Shizuoka 4188666; (JP); USAMI, Yoshihisa c/o FUJIFILM Corporation, Ashigarakami-gun Kanagawa 2588538 (JP)
(74) Representative: HOFFMANN EITLE
(86) International application number: PCT/JP2005/021583
(87) International publication number: WO 2006/059531

(57) **Abstract**

It is an object to provide filters for optical recording media capable of preventing diffuse reflection of informing and reference lights from reflective films of optical recording media and inhibiting noise therefrom without shifting the selective reflection wavelength even when the incident angle is variable, optical recording media of hologram type having the filters and capable of recording images with higher density over the prior art, methods for producing the optical recording media with higher efficiency and lower cost, and also optical recording methods and optical reproducing methods that utilize the optical recording media. In order to attain the object, provided are filters for optical recording medium, comprising a colorant-containing layer that comprises at least one of pigments and dyes, preferably a dielectric deposition layer that is a laminate of multiple dielectric thin films having different refractive indices, and also optical recording media of hologram type comprising the filter.

## Description

### Technical Field

The present invention relates to filters for optical recording media, suited for wavelength-selective reflection films used in optical recording media of hologram type capable of recording images with higher density over the prior art; optical recording media having the filters; methods for producing the optical recording media; and optical recording or reproducing methods by use of the optical recording media.

### Background Art

One type of recording media capable of recording large amounts of information e.g. high-density image data is optical recording media. The optical recording media have been commercially introduced, for example, in a form of rewritable optical recording media such as optical magnetic discs and phase change optical discs and in a form of recordable optical recording media such as CD-Rs. These optical recording media have been limitlessly demanded for their still larger capacity. However, all of optical recording media have conventionally been based on two-dimensional recording, which imposes a limit in a sense for increasing their recording capacity. Accordingly, optical recording media of hologram type capable of recording in three-dimensional fashion have been attracting attention in recent years.

The optical recording media of hologram type typically record information in a way that an informing light having a two-dimensional intensity distribution and a reference light having approximately the same intensity with the reference light are duplicated at inside of a photosensitive recording layer, thereby yielding a distribution of an optical property by use of an interference pattern formed by the lights. On the other hand, when recorded information is to be read or reproduced, only the reference light is irradiated onto the recording layer in the similar arrangement as at the recording, and the diffracted light having the intensity distribution corresponding to the optical property distribution formed inside the recording layer is emitted from the recording layer. In the optical recording media of hologram type, the optical property distribution is three-dimensionally formed inside the recording layer, therefore, one region where information being recorded by an informing light and another region where information being recorded by another informing light can be partially overlapped, thus multiple recording can be realized. When digital volume holography is available, the original information can be reproduced exactly even if the overwriting decreases somewhat the signal/noise ratio (S/N ratio) by virtue that the S/N ratio can be made remarkably higher at one spot. As a result, the multiple recording times may be extended into as much as several hundred times, and the recording capacity of optical recording media may be increased remarkably (see Patent Literature 1).

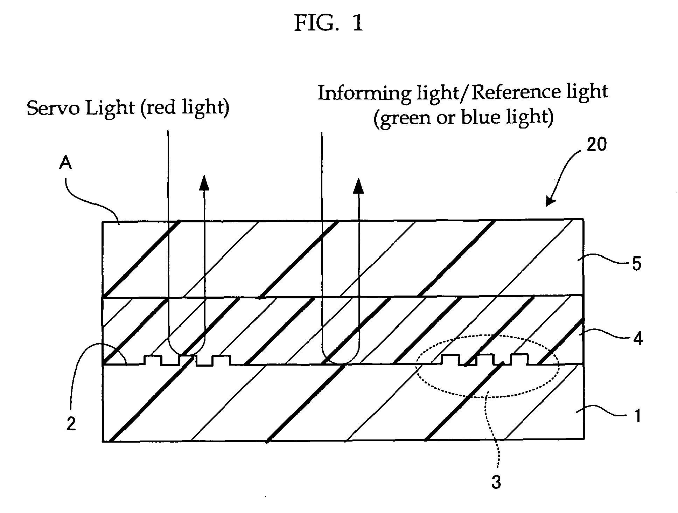

As for the optical recording media of hologram type, for example, an optical recording medium is proposed, as shown in FIG. 1, that is provided with servo pit pattern 3 at the surface of lower substrate 1, reflective film 2 of aluminum etc. on the servo pit pattern, recording layer 4 on the reflective film, and upper substrate 5 on the recording layer (see Patent Literature 2).

However, there exists such a problem in the optical recording medium 20 having the construction shown in FIG.1 that the recording density decreases by approximately half due to the construction of the servo zone and recording zone being divided in a plane.

Accordingly, the optical recording medium of Patent Literature 3 utilizes a circular light for the informing and reference lights, and is provided with a cholesteric liquid crystal layer or dichroic mirror layer as a filter layer between the recording layer and the reflective layer, and the recording layer and the servo layer are superimposed in the thickness direction. This proposal may bring about doubling of the recording density. In addition, when the cholesteric liquid-crystalline layer of monolayer is utilized as the filter layer that has the same rotating direction with the circular light of the informing light in the spiral configuration, the optical recording media can be mass-produced with higher productivity and lower cost, and also the filter effect may be proper at vertical incidence 0°. In this proposal, however, noise may be induced with change of incident angle, i.e. because incident light inclination of 10° or more tends to cause a shift into the selective reflection wavelength and thus the informing light and the reference light reach the reflective film through the filter layer. This phenomenon leads to a problem that the optical recording media cannot be applied to conventional lens optical systems where the incident light passes through a diaphragm and exhibits an inclination of no less than ±10°.

In addition, filters based on cholesteric liquid crystal layers may be produced with lower cost and adapted to mass-production. However, the filters with cholesteric liquid crystal layers are likely to suffer from lower reflectance, e.g. 20% at lowest, of linear polarization or ordinary light under recording-system changes and thus leak light increases correspondingly although the reflectance being sufficiently high for writing or reading light with 350 to 600 nm of circular polarization.

Here, it is estimated that a film based on dichroic mirror described above needs as much as 50 or more deposition layers in order to correspond with conventional optical lens systems, which resulting in a remarkably expensive optical recording medium.

Accordingly, optical recording media of hologram type, capable of preventing diffuse reflection of informing and reference lights from reflective films of optical recording media and inhibiting noise therefrom without shifting the selective reflection wavelength even when the incident angle is variable, have not been mass-produced yet with higher efficiency and lower cost, thus it is currently desired that such optical recording media can be produced promptly.
Patent Literature 1: Japanese Patent Application Laid-Open (JP-A) No. 2002-123949
Patent Literature 2: JP-A No. 11-311936
Patent Literature 3: JP-A No. 2004-265472

The present invention aims to provide filters for optical recording media capable of preventing diffuse reflection of informing and reference lights from reflective films of optical recording media and inhibiting noise therefrom without shifting the selective reflection wavelength even when the incident angle is variable, optical recording media of hologram type having the filters and capable of recording images with higher density over the prior art, methods for producing the optical recording media with higher efficiency and lower cost, and also optical recording methods and optical reproducing methods that utilize the optical recording media.

### Disclosure of Invention

The inventive filter for optical recording medium comprises a colorant-containing layer that contains a colorant of at least one of pigments and dyes.

It is preferred in the inventive filter for optical recording medium that the colorant is a red pigment, the transmittance is 33% or less to the light of 532 nm, and the transmittance is 66% or more to the light of 655 nm.

The inventive filter for optical recording medium comprises a colorant-containing layer that contains a colorant of at least one of pigments and dyes, therefore, the transmittance is 33% or less to the light of 532 nm, and the transmittance is 66% or more to the light of 655 nm, consequently, leak light of 532 nm through the filter can be absorbed, servo light of 655 nm can be transmitted, and noise can be prevented.

It is preferred that the inventive filter for optical recording medium comprises a dielectric deposition layer that is a laminate of multiple dielectric thin films having refractive indices different each other, the dielectric deposition layer is a multiple film laminate that comprises alternately a dielectric thin film having a high refractive index and a dielectric thin film having a low refractive index, the dielectric deposition layer is a laminate of 2 to 20 dielectric thin films, and/ or the dielectric deposition layer is disposed on the colorant-containing layer.

It is preferred in the inventive filter for optical recording medium that the dielectric deposition layer is laminated on the colorant-containing layer, thereby the inventive filter has a transmittance of 50% or more to the light of 655 nm in a range of incident angle ±40° and a reflectance of 30% or more to the light of 532 nm, thus is far from angle-dependent to reflect irradiating light.

It is preferred in the inventive filter of optical recording medium that a light having a first wavelength is reflected and a light having a second wavelength different from the first light is reflected, the first wavelength is 350 to 600 nm and the second wavelength is 600 to 900 nm, the transmittance is 50% or more to the light of 655 nm in a range of incident angle ±40° and the reflectance is 30% or more to the light of 532 nm, the inventive filter is use as a selective-reflection film of optical recording medium that records information on the basis of holography, an informing light and a reference light are irradiated as a coaxial light beam and information is recorded on the optical recording medium by an interference pattern between the informing light and the reference light.

The inventive optical recording medium comprises an upper substrate, a lower substrate, a recording layer on the lower substrate that records information on the basis of holography, and a filter layer between the lower substrate and the recording layer; and the filter layer comprises a colorant-containing layer that contains a colorant of at least one of pigments and dyes.

The inventive optical recording medium, by virtue of the constitution described above, may be free from shifting the selective reflection wavelength even when the incident angle is variable, and prevent diffusion light caused by diffuse reflection from reflective surface since informing, reference, and reproducing lights do not reach the reflective film. Accordingly, no noise due to the diffusion light is overlapped with reproduction images nor detected at CMOS sensors or CCDs, thus reproduction images may be detected at least in an error-correctable level. The noise due to diffusion light is more problematic as the hologram multiplicity comes to larger. That is, when the hologram multiplicity comes to as large as 10, for example, the diffraction efficiency per hologram is lowered significantly, therefore, the presence of diffusion noise tends to make much difficult to detect reproduction images. The present invention, as described above, may solve the problem, and achieve higher density image recording over the prior art.

It is preferred in the inventive optical recording medium that the colorant is a red pigment, the transmittance is 33 % or less to the light of 532 nm, and the transmittance is 66% or more to the light of 655 nm.

The inventive optical recording medium comprises a colorant-containing layer that contains a colorant of at least one of pigments and dyes, therefore, the transmittance is 33% or less to the light of 532 nm, and the transmittance is 66% or more to the light of 655 nm, consequently, leak light of 532 nm through the filter can be absorbed, servo light of 655 nm can be transmitted, and noise can be prevented.

It is preferred in the inventive optical recording medium that the filter layer comprises a dielectric deposition layer that is a laminate of multiple dielectric thin films having refractive indices different each other, the dielectric deposition layer is a multiple film laminate that comprises alternately a dielectric thin film having a high refractive index and a dielectric thin film having a low refractive index, the dielectric deposition layer is a laminate of 2 to 20 dielectric thin films, and/or the dielectric deposition layer is disposed on the colorant-containing layer.

It is preferred in the inventive optical recording medium that the dielectric deposition layer is laminated on the colorant-containing layer, thereby the inventive filter has a transmittance of 50% or more to the light of 655 nm in a range of incident angle ±40° and a reflectance of 30% or more to the light of 532 nm, thus is far from angle-dependent to reflect irradiating light.

It is preferred in the inventive optical recording medium that a light having a first wavelength is reflected and a light having a second wavelength different from the first light is reflected at the filter layer, the first wavelength is 350 to 600 nm and the second wavelength is 600 to 900 nm, the transmittance is 50% or more to the light of 655 nm in a range of incident angle 40° and the reflectance is 30% or more to the light of 532 nm, the substrate has a servo pit pattern, a reflective film is provided on the servo pit pattern, and/or the reflective film is of metal.

It is preferred in the inventive optical recording medium that a first gap layer is provided between the filter layer and the reflective layer in order to smoothen the surface of the substrate. By virtue of the first gap layer between the filter layer and the reflective layer in the inventive optical recording medium, the reflective film may be protected and also the size of hologram formed on the recording layer may be adjusted.

It is preferred in the inventive optical recording medium that a second gap layer is provided between the recording layer and the filter layer. The second gap layer in the inventive recording medium may assure a point where the informing light and the reproducing light focus; that is, in cases that a photopolymer is filled into the region, excessive exposure tends to consume polymers excessively to decrease multiple-recording capacity, which may be effectively prevented by disposing the second gap that is non-reactive and transparent.

The inventive method for producing an optical recording medium may produce the inventive optical recording medium, and comprises a step of processing the inventive filter for optical recording medium into a shape of an optical recording medium, and a step of forming a filter layer by laminating the processed filter with the lower substrate.

In accordance with the inventive method for producing an optical recording medium, the filter for optical recording medium is processed into a shape of an optical recording medium and the processed filter is laminated with the lower substrate to form a filter layer, which therefore leading to mass-production of optical recording media with higher efficiency and lower cost compared to the prior art.

In the inventive optical recording method, an informing light and a reference light are irradiated as a coaxial light beam onto the inventive optical recording media, and the information is recorded on the recording layer by use of an interference pattern between the informing light and the reference light.

In accordance with the inventive optical recording method, a coaxial light beam of an informing light and a reference light is irradiated onto the inventive optical recording media, and an interference pattern between the informing light and the reference light records information on the recording layer, which therefore leading to higher density recording over the prior art.

The inventive optical reproducing method may reproduce information by way of irradiating a reference light onto the interference pattern on the recording layer recorded by the inventive optical recording method.

In accordance with the optical reproducing method, the interference pattern on the recording layer recorded by the inventive optical recording method can be effectively correctly read to thereby reproduce the high density recording information.

### Brief Description of Drawings

FIG.1 is a schematic cross section that exemplarily shows a configuration of a conventional optical recording medium.
FIG. 2 is a graph that shows a transmission spectrum of a red pigment.
FIG. 3 is a graph that shows reflection properties of a filter for optical recording medium in terms of incident light from the normal direction (at 0°) of the filter.
FIG. 4 is a graph that shows reflection properties of a filter for optical recording medium in terms of incident light from 40° inclined direction of the filter layer.
FIG. 5 is a schematic cross section that exemplarily shows an optical recording medium of the first embodiment according to the present invention.
FIG. 6 is a schematic cross section that exemplarily shows an optical recording medium of the second embodiment according to the present invention.
FIG. 7 is an explanatory view that shows exemplarily an optical system around an optical recording medium according to the present invention.
FIG. 8 is a block diagram that shows exemplarily an entire construction, mounted with an inventive optical recording medium, of an optical recording and reproducing apparatus according to the present invention.
FIG. 9 shows simulative reflection properties in terms of a three-layer laminate of a dielectric thin film; the left side is of incident angle 0° and the right side is of incident angle 40°.
FIG. 10 shows simulative reflection properties in terms of a five-layer laminate of a dielectric thin film; the left side is of incident angle 0° and the right side is of incident angle 40°.
FIG.11 shows simulative reflection properties in terms of a seven-layer laminate of a dielectric thin film; the left side is of incident angle 0° and the right side is of incident angle 40°.
FIG. 12 shows simulative reflection properties in terms of a nine-layer laminate of a dielectric thin film; the left side is of incident angle 0° and the right side is of incident angle 40°.

### Best Mode for Carrying Out the Invention

### Filter for Optical Recording Medium

The inventive filter for optical recording medium comprises a colorant-containing layer, a dielectric deposition layer, a substrate, and also other optional layers.

### Colorant-Containing Layer

The colorant-containing layer comprises a colorant, a binder resin, a solvent, and other optional ingredients as required.

The colorant is preferably at least one of pigments and dyes; among these, red dyes and red pigments are preferable from the viewpoint of absorbing the light of 532 nm and transmitting the servo light of 655 nm; particularly preferable are the red pigments.

The red dye may be properly selected from conventional ones; examples thereof include acid dyes such as C.I. ACID REDs 1, 8, 13, 14, 18, 26, 27, 35, 37, 42, 52, 82, 87, 89, 92, 97,106,111,114,115,134,186, 249, 254 and 289; basic dyes such as C.I. BASIC REDs 2,12,13,14,15,18, 22, 23, 24, 27, 29, 35, 36, 38, 39, 46, 49, 51, 52, 54, 59, 68, 69, 70, 73, 78, 82,102,104,109 and 112; and reactive dyes such as C.I. Reactive Red 1, 14, 17, 25, 26, 32, 37, 44, 46, 55, 60, 66, 74, 79, 96 and 97. These may be used alone or in combination of two or more.

The red dye may be properly selected from conventional ones depending on the purpose; examples thereof include C.I. PIGMENT RED 9, C.I. PIGMENT RED 97, C.I. PIGMENT RED 122, C.I. PIGMENT RED 123, C.I. PIGMENT RED 149, C.I. PIGMENT RED 168, C.I. PIGMENT RED 177, C.I. PIGMENT RED 180, C.I. PIGMENT RED 192, C.I. PIGMENT RED 209, C.I. PIGMENT RED 215, C.I. PIGMENT RED 216, C.I. PIGMENT RED 217, C.I. PIGMENT RED 220, C.I. PIGMENT RED 223, C.I. PIGMENT RED 224, C.I. PIGMENT RED 226, C.I. PIGMENT RED 227, C.I. PIGMENT RED 228, C.I. PIGMENT RED 240, C.I. PIGMENT RED 48:1, Permanent Carmine FBB (C.I. PIGMENT RED 146), Permanent Ruby FBH (C.I. PIGMENT RED 11), Fastel Pink B sputa (C.I. PIGMENT RED 81). These may be used alone or in combination of two or more.

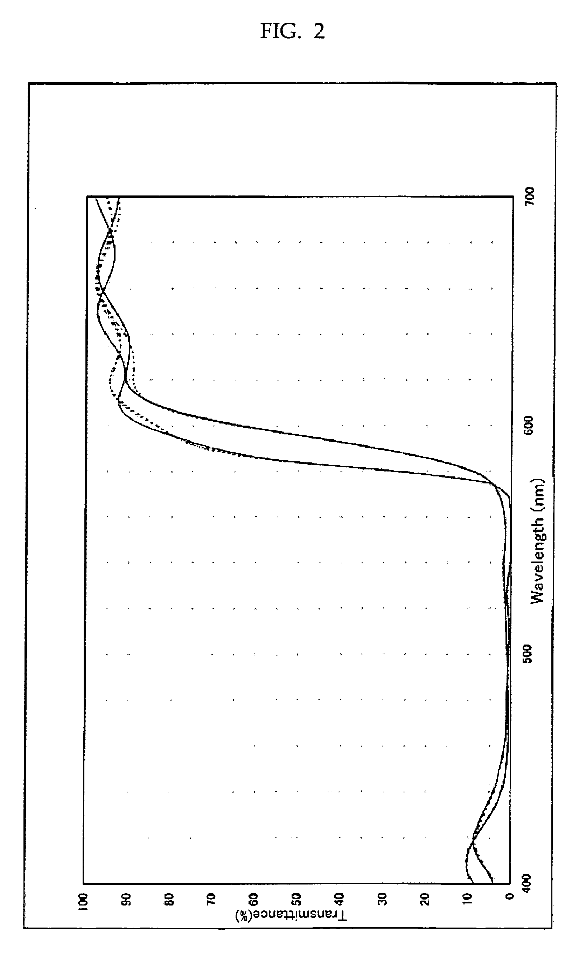

Among these, such red pigments are preferably used in particular that exhibit a light transmission spectrum of 10% or less to the light of 532 nm and 90% or more to the light of 655 nm, as shown in FIG. 2.

The content of the colorant is preferably 0.05 % by mass to 90% by mass based on the total solid mass in the colorant-containing layer, more preferably 0.1 to 70% by mass. When the content is less than 0.05% by mass, the colorant-containing layer may be necessary to be as thick as 500 µm or more, and when the content is more than 90% by mass, the colorant-containing layer may lose self-stability, and the film may collapse while producing the colorant-containing layer.

### Binder Resin

The binder resin may be properly selected from conventional ones depending on the purpose; examples thereof include polyvinylalcohol resins; vinylchloride-vinylacetate copolymers; copolymers of vinylchloride and/or vinyl acetate and at least one selected from vinyl alcohols, maleic acid, and acrylic acid; vinylchloride-vinilidenechloride copolymers; vinylchloride-acrylonitrile copolymers; ethylene-vinylacetate copolymers; cellulose derivatives such as nitrocellulose resins; polyacrylic resins; polyvinylacetal resins; polyvinylbutyral resins; epoxy resins; phenoxy resins; polyurethane resins and polycarbonate resins. These may be used alone or in combination.

To further improve the dispersibility and durability, a polar group(s) is preferably introduced into molecules of the binder resin. Examples of the polar group are an epoxy group, -CO₂H, -OH, -NH₂, -SO₃M, -OSO₃M, -PO₃M₂, -OPO₃M₂ and the like, provided that M is at least any one of hydrogen atom, alkali metals and ammonium. Moreover, in cases where plural Ms are present in the one polar group, such Ms may be mutually different. The content of the polar group is preferably 10⁻⁶ equivalence to 10⁻⁴ equivalence per gram of the binder resin.

The binder resins are preferably hardened by adding a crosslinking agent selected from conventional isocyanate compounds etc.

The content of the binder resin is preferably 10% by mass to 99.95% by mass based on the total solid mass in the colorant-containing layer, more preferably 30 % by mass to 99.9% by mass.

The respective components are dissolved or dispersed into a suitable solvent to prepare a coating liquid, then the coating liquid is coated on a base material described later by desirable coating processes, thereby the colorant-containing layer may be formed.

The solvent may be properly selected from conventional ones depending on the purpose; examples thereof include water; alkoxypropionic acid esters such as 3-methoxypropionic acid methylester, 3-methoxypropionic acid ethylester, 3-methoxypropionic acid propylester, 3-ethoxypropionic acid methylester, 3-ethoxypropionic acid ethylester and 3-ethoxypropionic acid propylester; alkoxy alcohol esters such as 2-methoxypropylacetate, 2-ethoxypropylacetate and 3-methoxybutylacetate; lactic acid esters such as methyl lactate and ethyl lactate; ketones such as methyl ethyl ketone, cyclohexanone and methylcyclohexanone; γ-butyrolactone; N-methylpyrrolidone; dimethylsulfoxide; chloroform; and tetrahydrofuran. These may be used alone or in combination.

The coating process may be properly selected depending on the purpose; examples thereof include inkjet processes, spin coating processes, kneader coating processes, bar coating processes, blade coating processes, casting processes, dipping processes and curtain coating processes.

The thickness of the colorant-containing layer is preferably 0.5 µm to 200 µm, more preferably 1.0 µm to 100 µm. When the thickness is less than 0.5 µm, the binder resin for enclosing the colorant to form a film may be impossible to include in a sufficient content, when it is more than 200 µm, the excessively thick filter may require excessively large optical systems for irradiating light and servo light.

### Dielectric Deposition Layer

The dielectric deposition layer, which being disposed on the colorant-containing layer, is a laminate of multiple dielectric thin films with different refractive indices. It is preferred that the dielectric deposition layer is alternatively laminated multiple films of a dielectric thin film having a low refractive index and a dielectric thin film having a high refractive index in order to serve as a wavelength-selective reflective film; the multiple layers may be formed of more than two kinds of layers.

The number of the laminated multiple layers is preferably 2 to 20, more preferably 2 to 12, still further preferably 4 to 10, most preferably 6 to 8. When the number of the laminated multiple layers is more than 20, the productivity may be decreased due to multilayer vapor deposition process, which being possibly inadequate for the object and effect of the invention.

The order to laminate the dielectric thin films may be properly selected depending on the purpose; for example, a thin film with a low refractive index is initially laminated where an adjacent thin film has a higher refractive index. On the other hand, a film with a high refractive index is initially deposited when an adjacent thin film has a lower refractive index. The border line of refractive indices for low or high is typically 1.8. The border line is not necessarily absolutely, and dielectric thin films may have relatively high or low refractive indices and be disposed alternatively.

The material for the dielectric thin film having a high refractive index may be properly selected depending on the purpose; examples thereof include Sb₂O₃, Sb₂S₃, Bi₂O₃, CeO₂, CeF₃, HfO₂, La₂O₃, Nd₂O₃, Pr₆O₁₁, Sc₂O₃, SiO, Ta₂O₅, TiO₂, TlCl, Y₂O₃, ZnSe, ZnS and ZrO₂ Among these, Bi₂O₃, CeO₂, CeF₃, HfO₂, SiO, Ta₂O₅, TiO₂, Y₂O₃, ZnSe, ZnS and ZrO₂ are preferable, and SiO, Ta₂O₅, TiO₂ Y₂O₃, ZnSe, ZnS and ZrO₂ are particularly preferable.

The material for the dielectric thin film having a low refractive index may be properly selected depending on the purpose; examples thereof include Al₂O₃, BiF₃, CaF₂, LaF3, PbCl₂, PbF₂, LiF, MgF₂, MgO, NdF₃, SiO₂, Si₂O₃, NaF, ThO₂ and ThF₄. Among these, Al₂O₃, BiF₃, CaF₂, MgF₂, MgO, SiO₂ and Si₂O₃ are preferable, and Al₂O₃, CaF₂, MgF₂ MgO, SiO₂ and Si₂O₃ are particularly preferable.

In addition, the atomic ratio in the material for the dielectric thin film may be properly selected depending on the purpose; the atomic ratio may be adjusted by changing the concentration of atmosphere gas upon film deposition.

The process for depositing the dielectric thin film may be properly selected depending on the purpose; for example, the process is exemplified by physical vapor deposition (PVD) processes such as vacuum vapor deposition processes, sputtering processes, ion plating processes, ion beam processes, ion assist processes and laser ablation processes; chemical vapor deposition (CVD) such as thermal CVD processes, optical CVD processes and plasma CVD processes. Among these methods, physical vapor deposition (PVD) processes are preferable, and sputtering processes are particularly preferable.

The sputtering processes are preferably DC spattering processes in view of higher deposition rates. It is preferred in the DC spattering processes that highly conductive materials are employed.

The processes for depositing multiple thin films by sputtering are exemplified by (1) single-chamber processes, where multiple dielectric thin films are alternately or sequentially deposited using one chamber and (2) multi-chamber processes, where multiple dielectric thin films are sequentially deposited using multiple chambers. Among these, the multi-chamber processes are particularly preferable in view of higher productivity and lower contamination.

The thickness of the dielectric thin film is preferably λ/16 to λ, more preferably λ/8 to 3λ/4, most preferably λ/6 to 3λ/8, in which λ is the optical wavelength.

The light, transmitting through the dielectric deposition layer, is repeatedly reflected for a part of the light at each of the dielectric thin films, then the reflected lights interfere each other, and the light having a wavelength defined by a product between the thickness of the dielectric thin film and the refractive index for the light of the thin film is selectively transmitted. The center transmission wavelength of the dielectric deposition layer has an angle dependency to incident light, thus the transmission wavelength can be controlled by varying the incident light.

When the number of laminated layers is 20 or less in the colorant-containing layer, the light of the selective-reflection wavelength leaks the filter in a rate of a few to several tens percent and transmits through the filter. In this regard, the colorant-containing layer disposed beneath the dielectric deposition layer can absorb the leak light. The colorant-containing layer, which containing at least one of red pigments and red dyes, can absorb the light of 350 to 600 nm, but transmits the light of 600 to 900 nm as the servo beam.

The filter for optical recording medium, having the colorant-containing layer and the dielectric deposition layer, preferably performs to transmit the light of the first wavelength and reflect the light of the second wavelength different from the former; preferably, the first wavelength is 350 to 600 nm, and the second wavelength is 600 nm to 900 nm. The optical recording medium preferably has a configuration that the recording layer, the dielectric deposition layer, the colorant-containing layer and the servo pit pattern are preferably laminated in order from the side of the optical system, in this regard.

It is preferred that the filter for optical recording medium has a light transmittance of no less than 50%, more preferably no less than 80%, for the light of 655 nm and a light reflectance of no less than 30%, more preferably no less than 40%, in incident angle ±40°.

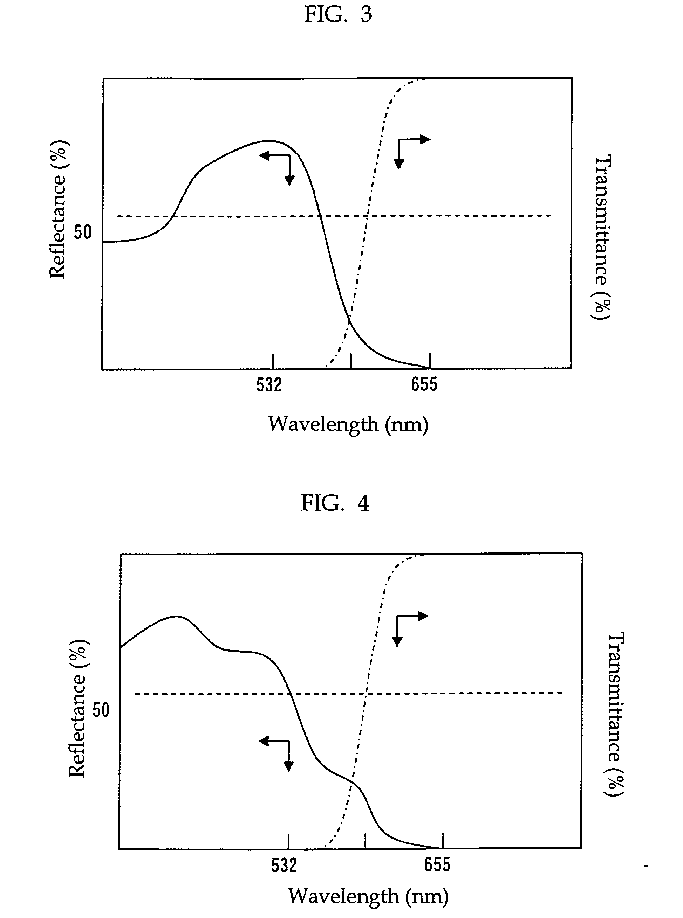

Specifically, the filter for optical recording medium, having the colorant-containing layer and the dielectric deposition layer, has reflection properties shown in FIG. 3 in terms of incident light from the normal direction (at 0°). In contrast, the filter exhibits such reflection properties that the reflective range shits toward shorter wavelength for lights incident from inclined direction, as shown in FIG. 4 in terms of 40°.

The filter for optical recording medium may be therefore free from problem to read signals since the reflectance is certainly no less than 30% for 532 nm even when the incident light is inclined 0° to 40° in the filter layer as demonstrated from the results shown in FIGs. 3 and 4.

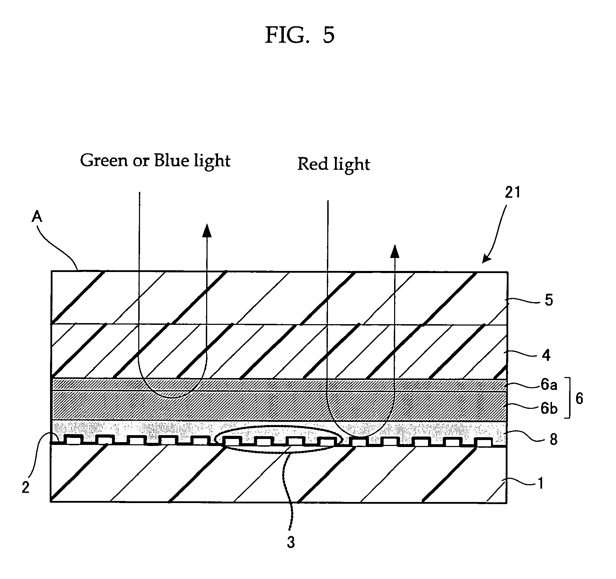

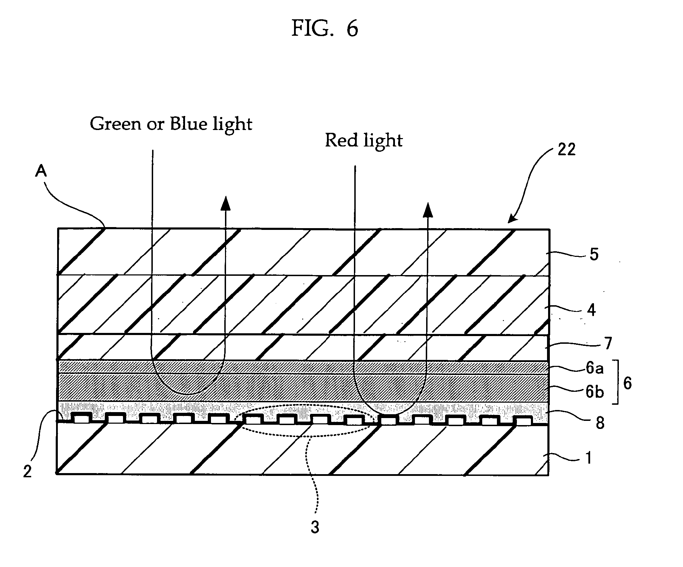

The filter for optical recording medium may be properly produced depending on the application; for example, (i) a colorant-containing layer is formed on a substrate, then a dielectric deposition layer is formed by a spattering process, or (ii) a mixture of a binder resin and a colorant is added for the first gap layer 8 shown in FIGs. 5 and 6.

The thickness of the filter for optical recording medium is preferably 0.5 to 200 µm, more preferably 1 to 100 µm, in terms of the colorant-containing layer and the dielectric deposition layer except for the substrate.

The filter for optical recording medium may be properly disposed depending on the application; preferably, the filter is processed into a disc-shape together with a base material through, for example, stamping processes, and is disposed on a lower substrate of an optical recording medium. Alternatively, a filter layer may be disposed directly on a lower substrate with no base material in cases where applied to optical recording media as a filter layer.

### Base Material

The base material may be properly selected in terms of the shape, configuration, size etc. depending on the purpose; the shape may be flat plate, film sheet etc.; the configuration may be of single-layered or multi-layered; and the size may be appropriately selected depending on the size of the optical recording medium.

The material of the base material may be inorganic or organic. Examples of the inorganic material include glasses, quartz glass and silicon. Examples of the organic material include acetate resins such as triacetylcellulose, polyester resins, polyethersulfone resins, polysulfone resins, polycarbonate resins, polyamide resins, polyimide resins, polyolefin resins, acrylic resins, polynorbornene resins, cellulose resins, polyarylate resins, polystyrene resins, polyvinylalcohol resins, polyvinylchloride resins, polyvinilidenechloride resins and polyacrylic resins. They may be used alone or in combination of two or more. These may be used alone or in combination.

The base material may be properly prepared or commercially available. The thickness of the base material may be properly selected depending on the purpose; preferably the thickness is 10 µm to 500 µm, more preferably 50 µm to 300 µm. When the thickness of the base material is less than 10 µm, the adhesiveness may be poor due to deflection of the substrate, and when over 500 µm, the focus sites of informing and reference light are required to shift considerably, which possibly leading to larger size of the optical system.

The inventive filter for optical recording medium may be applied to a wide variety of fields, used appropriately for forming or producing optical recording media of hologram type, and employed favorably for inventive optical recording media of hologram type, methods for producing the same, and optical recording or reproducing methods in particular.

### Optical Recording Medium

The inventive optical recording medium comprises an upper substrate, a lower substrate, a recording layer on the lower substrate, and a filter layer between the lower substrate and the recording layer, and also a reflective film, a first gap layer, a second gap layer, and other optional layers as required. The filter layer may be the inventive filter for optical recording medium described above.

### Substrate

The substrate may be properly selected depending on the application as for the shape, configuration, size etc.; the shape may be disc-like, card-like etc.; the material is required for the mechanical strength in terms of the hologram recording media. In the case that the light for recording or reproducing is directed through the substrate, it is necessary that the substrate is sufficiently transparent at the wavelength region of the employed light.

The material of the substrate is usually selected from glasses, ceramics, resins etc.; preferably, resins are employed in particular from the view point of formability and cost.

Examples of the resins include polycarbonate resins, acrylic resins, epoxy resins, polystyrene resins, acrylonitrile-styrene copolymers, polyethylene resins, polypropylene resins, silicone resins, fluorine resins, ABS resins and urethane resins. Among these, polycarbonate resins and acrylic resins are most preferable in view of their formability, optical characteristics and costs.

The base material may be properly prepared or commercially available.

Plural address-servo areas, i.e. addressing areas linearly extending in the radial direction of the substrate, are provided on the substrate at a given angle to one another, and each sector-form area between adjacent address-servo areas serves as a data area. In the address-servo areas, information for a focus servo operation and a tracking servo operation by means of a sampled servo system and address information are previously recorded (or pre-formatted) in the form of emboss pits or servo pits. The focus servo operation may be performed using a reflective surface of the reflective film. For example, wobble pits may be used as the information for tracking servo. The servo pit pattern is not necessarily required in the case that the optical recording medium is card-like shape.

The thickness of the substrate may be properly selected depending on the application; the thickness is preferably 0.1 to 5 mm, more preferably 0.3 to 2 mm. When the thickness of the substrate is less than 0.1 mm, the optical disc may be deformed during its storage; and when the thickness is more than 5 mm, the weight of the optical disc may be as heavy as over-loading on the drive motor. Recording Layer

Information may be recorded by use of holography on the recording layers. The materials for the recording layers are those capable of changing optical properties such as absorption index or refractive-index depending on intensity of radiation, upon irradiation of electromagnetic wave having a certain wavelength.

The material of the optical recording layer may be properly selected depending on the purpose; examples thereof include (i) polymerizable photopolymers that cause a polymerization reaction upon irradiation, (ii) photorefractive materials that exhibit a photorefractive effect to modulate the refractive index by causing a spatial electric charge distribution upon irradiation, (iii) photochromic materials that modulate the refractive index by causing a molecular isomerization upon irradiation, (iv) inorganic materials such as lithium niobate and barium titanate and (v) chalcogen materials.

The photopolymer of (i) described above may be properly selected depending on the purpose, for example, the photopolymer contains a monomer and a photoinitiator, and also other components such as sensitizer and oligomer as required.

The photopolymer may be one described in, for example, "Photopolymer Handbook" (by Kogyo Chosakai Publishing Co., 1989), "Photopolymer Technology" (by The Nikkan Kogyo Shinbun, Ltd., 1989), SPIE manuscript Vol. 3010 pp. 354-372 (1997) and SPIE manuscript Vol. 3291 pp. 89-103 (1998). In addition, the photopolymers described in US Patent Nos. 5759721, 4942112, 4959284 and 6221536; WO 97/44714, WO 97/13183, WO 99/26112 and WO 97/13183; Japanese Patent Nos. 2880342, 2873126, 2849021, 3057082 and 3161230; and Japanese Unexamined Patent Publication Nos. 2001-316416 and 2000-275859 may also be available.

The process for changing optical properties by irradiating a recording light onto the photopolymer may be based on diffusion of low molecular weight components. A component may be added that diffuses toward the reverse direction with that of the polymerizing component in order to mitigate the volume change on polymerization, or a compound having an acid cleavage structure may be further added in addition to the polymer. When the recording layer is formed using a photopolymer that contains the low molecular weight component, a structure capable of sustaining liquid may be required in the recording layer. When a compound having the acid cleavage structure is added, the volume change may be controlled by compensating the expansion due to the cleavage and the constriction due to the polymer polymerization.

The monomer may be properly selected depending on the purpose; example thereof include radically polymerizable monomers having an unsaturated bond such as acrylic and methacrylic group and cationic polymerization monomers having an ether structure such as epoxy and oxetane rings. These monomers may be monofunctional or polyfunctional and also be one utilizing a photo-crosslinking reaction.

Examples of the radically polymerizable monomers include acryloyl morpholine, phenoxyethylacrylate, isobornylacrylate, 2-hydroxypropylacrylate, 2-ethylhexylacrylate, 1,6-hexanediol diacrylate, tripropyleneglycol diacrylate, neopentylglycol PO modified diacrylate, 1,9-nonandiol diacrylate, hydroxylpivalic acid neopentylglycoldiacrylate, EO modified bisphenol A diacrylate, polyethyleneglycol diacrylate, pentaerythritol triacrylate, pentaerythritol tetraacrylate, pentaerythritol hexaacrylate, EO modified glycerol triacrylate, trimethylolpropane triacrylate, EO modified trimethylolpropane triacrylate, 2-naphtho-1-oxyethylacrylate, 2-carbazoyl-9-ylethylacrylate, (trimethylsilyloxy)dimethylsilyl propylacrylate, vinyl-1-naphthoate and N-vinylcarbazol.

Examples of the cationic polymerization monomers include bisphenol A epoxy resins, phenolnovolac epoxy resins, glycerol triglycidylether, 1,6-hexaneglycidylether, vinyltrimethoxysilane, 4-vinylphenyl trimethoxysilane, gamma-methacryloxy propyltriethoxysilane and compounds expressed by the formulas (A) to (E) below.

These monomers may be used alone or in combination of two or more.

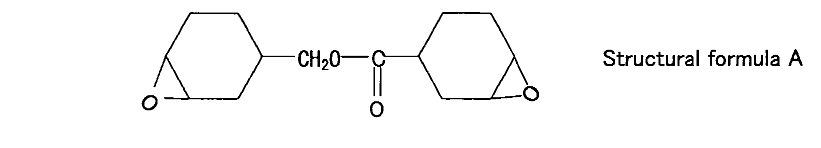

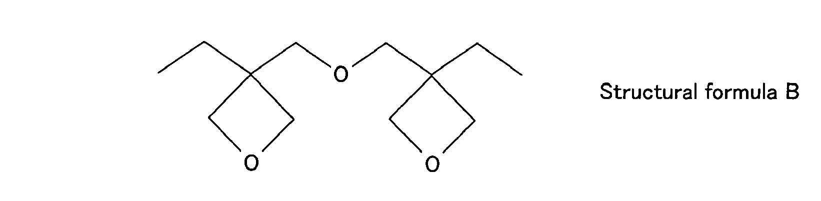

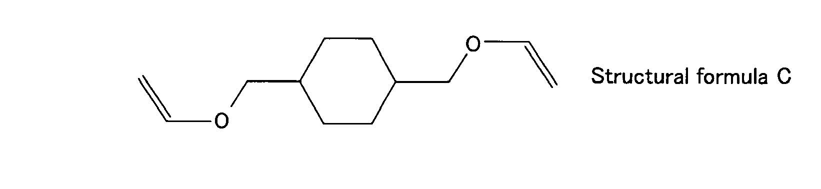

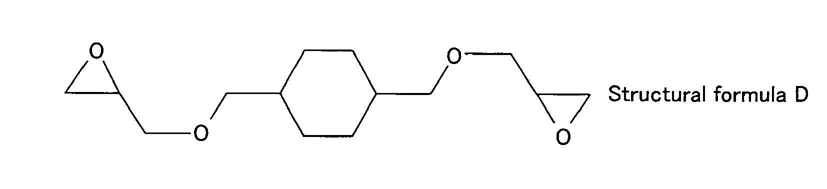

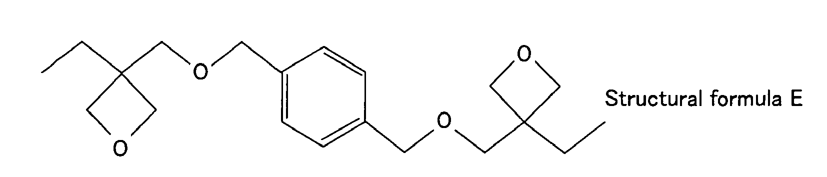

The photoinitiator may be selected from materials sensitive to the recording light, for example, from those capable of inducing radical polymerization, cation polymerization, crosslinking reaction etc.

Examples of the photoinitiator include 2,2'-bis(o-chlorophenyl)-4,4',5,5'-tetraphenyl-1,1'-biimidazole, 2,4,6-tris(trichloromethyl)-1,3,5-triazine, 2,4-bis(trichloromethyl)-6-(p-methoxyphenylvinyl)-1,3,5-triazine, diphenyliodonium tetrafluoroborate, diphenyliodonium hexafluorophosphate, 4,4'-di-t-butyldiphenylodonium tetrafluoroborate, 4-diethylamino phenylbenzenediazonium hexafluorophosphate, benzoin, 2-hydroxy-2-methyl-1-phenylpropane-2-one, benzophenone, thioxanthone, 2,4,6-trimethylbenzoyldiphenylacyl phosphineoxide triphenylbutylborate tetraethylammonium and titanocene compounds expressed by the formulas below. These may be used alone or in combination of two or more, and may be combined with a sensitizing dye considering the wavelength of irradiating light.

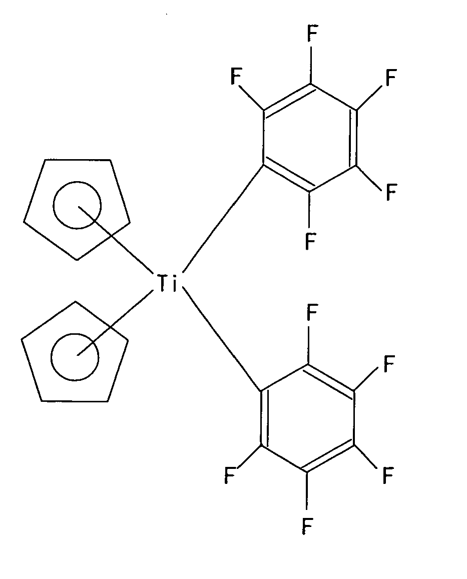

The photopolymer described above may be prepared by reaction of the monomer, the photoinitiator and the other components as required through stirring and mixing them. The resulting photopolymer, when being sufficiently of low viscosity, may be shaped by casting to prepare the recording layer. On the other hand, when being excessively viscous for the casting, the photopolymer is mounted on the lower substrate by use of a dispenser, then the photopolymer is pressed by the upper substrate in a manner that the upper substrate covers the lower substrate, thereby the photopolymer being spread entirely to form the recording layer.

The photorefractive material of (ii) described above may be properly selected depending on the purpose as long as the material exhibits the photorefractive effect; for example, the photorefractive material contains a charge generating material, a charge transporting material and other component as required.

The charge generating material may be properly selected depending on the purpose; examples thereof include phthalocyanine dyes such as metal phthalocyanines, non-metal phthalocyanines or derivatives thereof/ pigments; naphthalocyanine dyes/ pigments; azo dyes such as monoazo, disazo and triazo/ pigments; perylene dyes/ pigments; indigo dyes/ pigments; quinacridone dyes/ pigments; polycyclic quinone dyes such as anthraquinone and anthanthron/pigments; cyanine dyes/pigments; charge transfer complexes of electron acceptor substance and electron donor substance represented by TTF-TCNQ; azurenium salts; and fullerenes represented by C₆₀ and C₇₀ and methanofullerenes derived therefrom. These may be used alone or in combination.

### The charge transporting material, which performs to transport holes or electrons, may be a low molecular weight or polymer compound.

The charge transporting material may be properly selected depending on the purpose; examples thereof include nitrogen-containing cyclic compounds such as indole, carbazole, oxazole, isooxazole, thiazole, imidazole, pyrazole, oxadiazole, pyrazoline, thiadiazole, triazole and derivatives thereof; hydrazone compounds; triphenyl amines, triphenyl methanes, butadienes; stilbenes; quinone compounds such as anthraquinone and diphenylquinone or the derivatives; fullerenes represented by C₆₀ and C₇₀ and derivatives thereof; pi-conjugated polymers or oligomers such as polyacetylene, polypyrrole, polythiophene and polyaniline; sigma-conjugated polymers or oligomers such as polysilane and polygerman; polycyclic aromatic compounds such as anthracene, pyrene, phenanthrene and coronene. These may be used alone or in combination.

As for the process for forming the recording layer using the photorefractive material, for example, a coating liquid is prepared by dissolving or dispersing the photorefractive material in to a solvent, a coating film is formed using the coating liquid, and removing the solvent from the coating film thereby to prepare the recording layer. In addition, the coating film may be formed from the photorefractive material which being liquidized by heating, the coating film is then rapidly cooled to form the recording layer.

The photochromic material of (iii) described above may properly selected depending on the purpose from materials capable of causing a photochromic reaction; examples thereof include azobenzene compounds, stilbene compounds, indigo compounds, thioindigo compounds, spiropyran compounds, spirooxazine compounds, flukido compounds, anthracene compounds, hydrazone compounds and cinnamic compounds. Among these, particularly preferable are azobenzene derivatives and stilbene derivatives that undergo a structural change of cis-trans isomerization upon light irradiation as well as spiropyran derivatives and spirooxazine derivatives that undergo a structural change of open or closed circular upon light irradiation.

The chalcogen material (v) described above is, for example, a material that comprises a chalcogenide glass containing a chalcogen element and metal particles that is dispersed into the chalcogenide glass upon light irradiation. The chalcogenide glass may be of nonoxidative amorphous material containing a chalcogen element of S, Te or Se and capable of optically doping the metal particles.

Examples of the nonoxidative amorphous materials containing a chalcogen element include Ge-Se glasses, As-S glasses, As-Se glasses and As-Se-Ce glasses; among these, Ge-Se glasses are preferable. When the Ge-Se glasses are employed as the chalcogenide glass, the composition ratio of Ge/S may be optionally arranged depending on the wavelength of irradiated light; preferably, the chalcogenide glass has mainly a composition expressed by GeS2.

The metal particles may be properly selected depending on the purpose from those having the property to be optically doped into the chalcogenide glass by light irradiation; examples thereof include Al, Au, Cu, Cr, Ni, Pt, Sn, In, Pd, Ti, Fe, Ta, W, Zn and Ag. Among these, Ag, Au and Cu are preferable since the optical doping easily progresses, particularly preferable is Ag due to remarkable tendency to cause the optical doping.

The content of the metal particles dispersed into the chalcogenide glass is preferably 0.1% by volume to 2% by volume based on the entire volume of the recording layer, more preferably 0.1 % by volume to 1.0% by volume. When the content of the metal particles is less than 0.1 % by volume, the accuracy of the recording may be low due to insufficient transmissivity change by the optical doping, and when over 2% by volume, the optical doping hardly progresses in a sufficient level due to lowered optical transmissivity of the recording material.

The recording layer may be properly formed by conventional processes depending on the material; examples of the preferable processes for forming the layers are vapor deposition processes, wet film-forming processes, MBE (molecular beam epitaxy) processes, cluster ion beam processes, molecular laminating processes, LB processes, printing processes and transfer processes. Among these, the vapor deposition processes and wet film-forming processes are preferable.

The vapor deposition process may be properly selected depending on the purpose from conventional ones; specific examples thereof include vacuum vapor deposition processes, resistance heating vapor deposition processes, chemical vapor deposition processes and physical vapor deposition processes. The chemical vapor deposition processes are exemplified more specifically by plasma CVD processes, laser CVD processes, heat CVD processes and gas source CVD processes.

The recording layer may be formed by a wet film forming process, for example, in a manner that materials for the recording layer are dissolved and/ or dispersed in a solvent to form a coating solution, then the coating solution is applied and dried. The wet film forming process may be properly selected depending on the purpose from conventional ones; examples thereof include ink jet processes, spin coating processes, kneader coating processes, bar coating processes, blade coating processes, casting processes, dipping processes and curtain coating processes.

The thickness of the recording layer may be properly selected depending on the purpose; the thickness is preferably 1 µm to 1000 µm, more preferably 100 µm to 700 µm.

When the thickness of the recording layer is within the preferable range, the sufficient S/N ratio may be attained even on the shift multiplex of 10 to 300; and the more preferable range may advantageously lead to more significant effect thereof.

### Reflective Film

The reflective film is formed on the surface of the servo pit pattern of the substrate. As for the material of the reflective film, such a material is preferable that provides the recording light reference light with high reflectivity. When the wavelength of light to be adopted is 400 nm to 780 nm, Al, Al alloys, Ag, Ag alloys and the like are preferably used. When the wavelength of light to be adopted is 650 nm or more, Al, Al alloys, Ag, Ag alloys, Au, Cu alloys, TiN and the like may be preferably used.

By use an optical recording medium e.g. DVD (digital video disc) which can reflect light by a reflective film and also can record or erase information, such directory information can be recorded and erased without adversely affecting holograms as those indicative of the locations where information has been recorded, the time when information has been recorded, and the locations where errors have occurred and how information has been re-recorded on spare areas.

The process for forming the reflective film may be properly selected depending on the purpose; examples thereof include various types of vapor deposition processes such as vacuum vapor deposition, sputtering, plasma CVD, photo CVD, ion plating and electron beam vapor deposition processes. Among these, sputtering processes are most preferable in view of mass productivity and film quality.

The thickness of the reflective film is preferably 50 nm or more, more preferably 100 nm or more, in order to secure sufficient reflectivity.

### First Gap Layer

The first gap layer is provided between the filter layer and the reflective film as required for smoothing the surface of the second substrate. Moreover, the first gap layer is effective to adjust the size of the hologram formed in the recording layer. Specifically, a gap layer between the recording layer and the servo pit pattern may be effective, since the recording layer requires the interference region of a larger size between the recording reference light and the informing light.

The first gap layer can be formed by, for example, applying UV curable resin etc. on the servo pit pattern by spin coating etc. and by curing the resin. In addition, when a filter layer is formed on a transparent base material, the transparent base material also serves as the first gap layer.

The thickness of the first gap layer may be properly selected depending on the purpose; the thickness is preferably 1 µm to 200 µm.

### Second Gap Layer

The second gap layer may be provided between the recording layer and the filter layer as required.

The material for the second gap layer may be properly selected depending on the purpose; examples thereof include transparent resin films such as triacetylcellulose (TAC), polycarbonate (PC), polyethylene terephthalate (PET), polystyrene (PS), polysulfone (PSF), polyvinylalcohol (PVA) and methyl polymethacrylate (PMMA); norbornene resin films such as ARTON (product name, by JSR Corp.), ZEONOA (product, by Nippon Zeon). Among these, those with high isotropy are preferable, and TAC, PC, ARTON and ZEONOA are most preferable.

The thickness of the second gap layer may be properly selected depending on the purpose; the thickness is preferably 1 µm to 200 µm.

The inventive optical recording media will be explained in more detail with reference to figures in the following.

### First Embodiment

FIG. 5 is a schematic cross-sectional view showing the structure of the first embodiment of the optical recording medium in the present invention. In the optical recording medium 21 according to the first embodiment, servo pit pattern 3 is formed on the second substrate 1 made of a polycarbonate resin or glass, and the servo pit pattern 3 is coated with Al, Au, Pt etc. to form reflective film 2. The servo pit pattern 3 is formed on the entire surface of the second substrate 1 in FIG. 5, alternatively, may be formed periodically as shown in FIG.1. In addition, the height of the servo pit pattern 3 is 1750 angstroms (175 nm) at maximum, which being significantly smaller than those of the other layers including the substrate.

The first gap layer 8 is formed by applying UV curable resin or the like on the reflective film 2 of the lower substrate 1 by spin coating or the like. The first gap layer 8 is effective for protecting the reflective film 2 and for adjusting the size of holograms created in recording layer 4. Specifically, the interference region between the recording reference light and the informing light requires a level of size in the holographic recording layer 4, a gap may be effectively provided between the recording layer 4 and the servo pit pattern 3.

The filter layer 6 is provided on the first gap layer 8, and the holographic recording layer 4 is sandwiched between the filter layer 6 and the second substrate 5 (polycarbonate resin or glass substrate) to thereby constitute the optical recording medium 21.

In FIG. 5, the filter layer 6 transmits only red light and blocks other color lights. Since the informing light, recording light and reproduction reference light are of green or blue, they do not pass through the filter layer 6 instead turn into a return light to emit from the entrance/ exit surface A without reaching the reflective film 2.

The filter layer 6 is a laminate of dielectric deposition layer, consisting of seven dielectric-deposition thin-layers having different refractive indices, on colorant-containing layer 6b. The filter layer 6 of the combination of the colorant-containing layer and the dielectric deposition layer may be directly formed on the first gap layer 8 by coating or vapor-deposition processes, or may be disposed by punching through the film of the colorant-containing layer and the dielectric deposition layer on the substrate into the shape of an optical recording medium. The combination of the colorant-containing layer and the dielectric deposition layer may lead to a transmittance of 50% or more to the light of 655 nm and the a reflectance of 30% or more to the light of 532 nm in a range of incident angle ±40°, thus the filter may be far from angle-dependent in terms of the selective reflection wavelength even under a variable incident angle.

The optical recording medium 21 of this embodiment may be of disc shape or card shape. The servo pit pattern is unnecessary where the optical recording medium 21 is a card shape. In the optical recording medium 21, the first substrate 1 is 0.6 mm thick, the first gap layer 8 is 100 µm thick, the filter layer 6 is 2 to 3 µm thick, the recording layer 4 is 0.6 mm thick, and the upper substrate 5 is 0.6 mm thick, leading to a total thickness of about 1.9 mm.

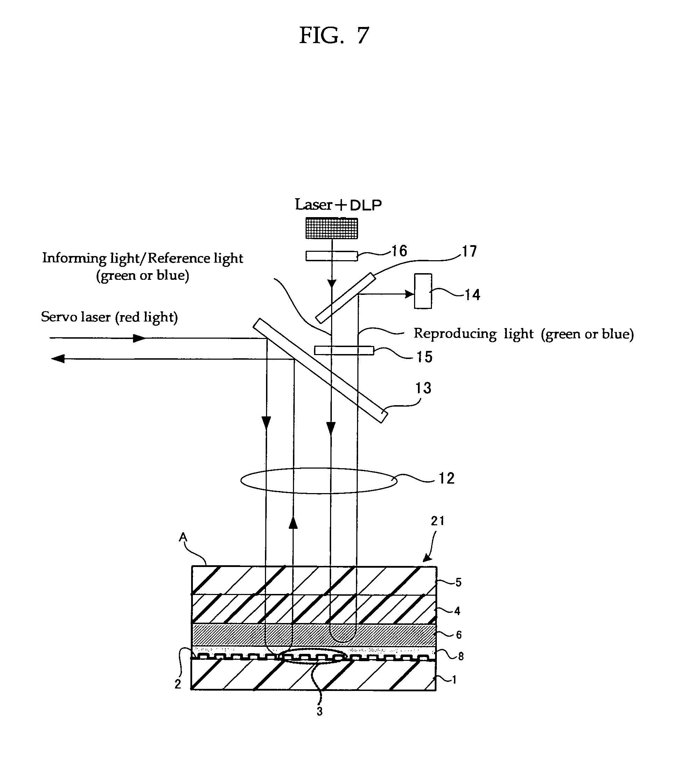

The optical operations around the optical recording medium 21 will be explained with reference to FIG. 7 in the following. Red light emitted from the servo laser source is reflected by a dichroic mirror 13 by almost 100%, and passes through objective lens 12. The servo light is irradiated onto the optical recording medium 21 so as to focus on the reflective film 2 by action of the objective lens 12. That is, the dichroic mirror 13 is designed to transmit green and blue lights but reflects red light almost by 100%. The servo light incident from the light entrance/ exit surface A of the optical recording medium 21 passes through the upper substrate 5, recording layer 4, filter layer 6 and first gap layer 8, is reflected by the reflective film 2, and passes again through the first gap layer 8, filter layer 6, recording layer 4 and upper substrate 5 to emit from the light entrance/ exit surface A. The return light passes through the objective lens 12 and is reflected by the dichroic mirror 13 by almost 100%, and then a servo information detector (not shown) detects servo information in the returning servo light. The detected servo information is used for focus servo operation, tracking servo operation, slide servo operation, and the like. The holographic material constructing the recording layer 4 is designed to be insensitive to red light. For this reason, even when the servo light passes through the recording layer 4 or is reflected diffusively by the reflective film 2, there arises no influence on the recording layer 4. In addition, the returning servo light reflected by the reflective film 2 is reflected almost 100% by the dichroic mirror 13; accordingly, the servo light is non-detectable by CMOS sensor or CCD 14 for the detection of reproduced images or providing the reproducing light with no noise.

Both of the informing light and recording reference light emitted from the recording/ reproducing laser source pass through the polarizing plate 16 to form a linear polarization then to form a circular polarization when passing through the half mirror 17 and the quarter wave plate 15. The circular polarization then passes through the dichroic mirror 13, and illuminates the optical recording media 21 by action of the objective lens 11 in a manner that the informing light and the reference light create an interference pattern in the recording layer 4. The informing light and reference light enter from the light entrance/ exit surface A and interact with each other in the recording layer 4 to form an interference pattern. Thereafter, the informing light and reference light pass through the recording layer 4 and enter into the filter layer 6, and then are reflected to turn into a return light before reaching the bottom of the filter layer 6. That is, the informing light and recording reference light do not reach the reflective film 2. This is because the filter layer 6, combined with the colorant-containing layer and the dielectric deposition film, transmits exclusively red light. Alternatively as long as the leak light through the filter layer is less than the 20% of the initial incident light in terms of light intensity, even when the leak light turns into a return light upon reaching the bottom face, the light intensity included into the reproducing light comes to less than 20%x20%=4% after reflecting again at the filter layer, which indicating that there arises substantially no problem.

### Second Embodiment

FIG. 6 is a schematic cross-sectional view showing the configuration of the second embodiment of the inventive optical recording medium. In the optical recording medium 22 of the second embodiment, servo pit pattern 3 is formed on the polycarbonate resin or glass substrate 1, and the servo pit pattern 3 is coated with Al, Au, Pt or the like to form the reflective film 2. The height of the servo pit pattern 3 is usually 1750 angstroms (175 nm), which being similar with the first embodiment.

The difference between the first embodiment and the second embodiment is that the second gap layer 7 is disposed between the filter layer 6 and the recording layer 4 in the optical recording medium 22 of the second embodiment.

The filter layer 6, which being a combination of the colorant-containing layer and the dielectric deposition layer, is formed on the first gap layer 8 after forming the first gap layer 8 and may be similar with that of the first embodiment.

In the second gap layer 7, there is a point at which both of the informing light and the reference light focus as described above. When this area is embedded by the photopolymer, excessive exposure takes place and thus an excess amount of monomers are consumed, leading to poor multiplexing recording capacity. Consequently, the non-reactive transparent second gap layer may be effectively provided.

In the optical recording medium 22, the lower substrate 1 is 1.0 mm thick, the first gap layer 8 is 100 µm thick, the filter layer 6 is from 3 to 5 µm thick, the second gap layer 7 is 70 µm thick, the recording layer 4 is 0.6 mm thick, the upper substrate 5 is 0.4 mm thick, which leading to a total thickness of about 2.2 mm.

When recording and reproducing information, the optical recording medium 22 having the structure described above is irradiated with a red servo light and a green informing light as well as a recording light and a reproducing reference light. The servo light enters from the light entrance/exit surface A, passes through the recording layer 4, the second gap layer 7, the filter layer 6 and the first gap layer 8, then is reflected by the reflective film 2 to turn into a return light. This return light sequentially passes through the first gap layer 8, the filter layer 6, the second gap layer 7, the recording layer 4 and upper substrate 5, and emits from the light entrance/ exit surface A. The emitted return light may be used for focus servo, tracking servo, etc. The holographic material constructing the recording layer 4 is designed to be insensitive to red light. For this reason, even when the servo light passes through the recording layer 4 or is reflected diffusively by the reflective film 2, there arises no influence on the recording layer 4. The green informing light etc. enter from the light entrance/ exit surface A, then pass through the recording layer 4 and second gap layer 7, and reflected by the filter layer 6 to tern into a return light. The return light sequentially passes through the second gap layer 7, the recording layer 4 and the upper substrate 5 again, and emits from the light entrance/exit surface A. Upon reproduction of information, both of the reproducing reference light and the diffracted light generated by irradiating the reproducing reference light onto the recording layer do not reach the reflective film 2 and emit from the light entrance/exit surface A. The optical operations around the optical recording medium 22 (i.e. objective lens 12, filter layer 6, CMOS sensor or CCD 14 of detector in FIG. 7) are similar to those in the first embodiment shown in FIG. 7, thus the description thereof will be omitted.

### Method for Producing Optical Recording Medium

The inventive method for producing an optical recording medium comprises at least a step of forming a filter layer, and also a step of forming a reflective film, a step of forming a recording film and other optional steps as required.

### Step of Forming Filter Layer

In the step of forming the filter layer, the inventive filter for optical recording medium is processed into a shape of an optical recording medium, and the processed filter is laminated with the lower substrate to form a filter layer. The inventive method for producing the filter for optical recording medium is explained above. The shape of the optical recording medium may be disc-like or card-like.

The method for processing the filter into a shape of the optical recording medium may be properly selected depending on the purpose; such processes may be employed as cutting processes with a press cutter, stamping processes with a stamping cutter and the like. In carrying out the lamination, for example, the filter is laminated to the substrate using an adhesive or tackiness agent in a manner that no air bubble is trapped therebetween.

The adhesive may be properly selected depending on the purpose; examples thereof include UV curable adhesives, emulsion adhesives, one-component curable adhesives and two-component curable adhesives.

The tackiness agent may be properly selected depending on the purpose; examples thereof include rubber agents, acrylic agents, silicone agents, urethane agents, vinylalkyl ether agents, polyvinylalcohol agents, polyvinylpyrrolidone agents, polyacrylamide agents and cellulose agents.

The thickness of the adhesive or tackiness agent may be properly selected depending on the purpose; from the viewpoint of optical properties and demands for thinning, the thickness of the adhesive is preferably 0.1 µm to 10 µm, more preferably 0.1 µm to 5 µm and the thickness of the tackiness agent is preferably 1 µm to 50 µm, more preferably 2 µm to 30 µm.

In some cases, the filter layer may be directly disposed on the substrate. For example, a coating liquid for colorant-containing layer is coated on the substrate to form a colorant-containing layer, then a dielectric deposition layer is formed on the colorant-containing layer by spattering processes.

### Optical Recording Method and Optical Reproducing Method

In the optical recording method according to the present invention, the informing light and the reference light are irradiated as a co-axial luminous flux, then the interference pattern formed by the interference of the informing light and the reference light is made use of recording the information on the recording layer. In the optical reproducing method according to the present invention, a reproducing light is irradiated onto the interference pattern of the recording layer that is recorded by the optical recording method according to the present invention.

In the optical recording method and the optical reproducing method according to the present invention, the informing light with a two-dimensional intensity distribution and the reference light with almost the same intensity to that of the informing light are superimposed inside the photosensitive recording layer, the resulting interference pattern formed inside the recording layer induces a distribution of the optical properties of the recording layer to thereby record such distribution as the information. On the other hand, when the recorded information is to be read (reproduced), only the reference light (reproducing light) is irradiated onto the recording layer from the same direction to that irradiated at the time of recording, a light having a intensity distribution corresponding to the distribution of the optical property formed inside the recording layer is emitted from the recording layer as a diffracted light.

### The optical recording method and the optical reproducing method according to the present invention may be carried out by use of the optical recording and reproducing apparatus explained below.

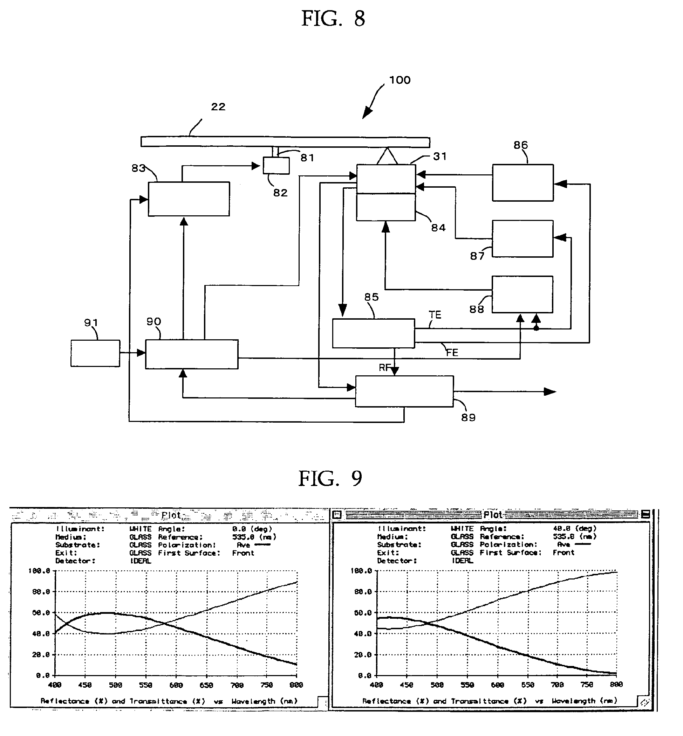

The optical recording and reproducing apparatus applied to the optical informing method and the optical reproducing method will be explained with reference to FIG. 8. FIG. 8 is an exemplary block flowchart showing the whole mechanism of the optical recording and reproducing apparatus according to the present invention. The optical recording and reproducing apparatus contains both of the optical recording apparatus and the optical reproducing apparatus.

This optical recording and reproducing apparatus 100 is equipped with spindle 81 on which the optical recording medium 20 is deposed, spindle motor 82 that rotates the spindle 81, and spindle servo circuit 83 that controls the spindle motor 82 so as to maintain the optical recording medium 20 at the predetermined revolution number.

The optical recording and reproducing apparatus 100 is also equipped with pickup unit 31 that irradiates the informing light and the reference light onto the optical recording medium to record information, and irradiates the reproducing reference light onto the optical recording medium 20 to detect the diffracted light to thereby reproduce the information recorded at the optical recording medium 20, and driving unit 84 that enables the pickup unit 31 to move in the radius direction of optical recording medium 20.

The optical recording and reproducing apparatus 100 is equipped with detecting circuit 85 that detects focusing error signal FE, tracking error signal TE, and reproducing signal RF from the output signal of the pickup unit 31, focusing servo circuit 86 that drives an actuator in the pickup unit 31 so as to move an objective lens (not shown) to the thickness direction of the optical recording medium 20 based upon the focusing error signal FE detected by the detecting circuit 85 to thereby perform focusing servo, a tracking servo circuit 87 that drives an actuator in the pickup unit 31 so as to move an objective lens (not shown) to the thickness direction of the optical recording medium 20 based upon the tracking error signal TE detected by the detecting circuit 85 to thereby perform tracking servo, and a sliding servo circuit 88 that controls the driving unit 84 based upon the tracking error signal TE and an indication from a controller mentioned hereinafter so as to move the pickup unit 31 to the radius direction of the optical recording medium 20 to thereby perform sliding servo.

The optical recording and reproducing apparatus 100 is also equipped with signal processing circuit 89 that decodes output data of the CMOS or CCD array described below in the pickup unit 31, to thereby reproduce the data recorded in the data area of the optical recording medium 20, and to reproduce the standard clock or determines the address based on the reproducing signal RF from the detecting circuit 85, controller 90 that controls the whole optical recording and reproducing apparatus 100, and controlling unit 91 that gives various instructions.

The controller 90 is configured to input the standard clock or address information outputted from the signal processing circuit 89 as well as controlling the pickup unit 31, the spindle servo circuit 83, the sliding servo circuit 88 and the like. The spindle servo circuit 83 is configured to input the standard clock outputted from the signal processing circuit 89. The controller 90 contains CPU (center processing unit), ROM (read only memory), and RAM (random access memory), the CPU realizes the function of the controller 90 by executing programs stored in the ROM on the RAM, a working area.

The optical recording and reproducing apparatus, applicable for the optical informing method and the optical reproducing method, is equipped with the optical recording media according to the present invention, therefore, may prevent diffuse reflection of the informing light and the reference light from the reflective film of the optical recording medium and also prevent noise generation without the sift of selective reflection wavelength even when the incident angle is variable since the optical absorption layer absorbs the light leaked from the filter layer; consequently higher density recording may be attained over the prior art.

The present invention can solve the various problems in the art and provide filters for optical recording media capable of preventing diffuse reflection of informing and reference lights from reflective films of optical recording media and inhibiting noise therefrom without shifting the selective reflection wavelength even when the incident angle is variable, optical recording media of hologram type having the filters and capable of recording images with higher density, methods for producing the optical recording media with higher efficiency and lower cost, and also optical recording methods and optical reproducing methods that utilize the optical recording media.

The present invention will be explained with reference to Examples, to which the present invention should be construed to be limited in no way. Simulation for Thickness Configuration and Reflection Property of Dielectric Deposition Layer

The dielectric deposition layer was simulated in terms of thickness configuration and reflection property under the calculation conditions using an optical thin-film calculation software (article name: TFCalc, by Software Spectra Inc.).

Calculation Condition
- Refractive indices of TiO₂, MgF₂ etc. were of TFCalc database
- Thicknesses were optimized to enhance the reflectance at 535 nm and transmittance at 650 nm
- Refractive index of the medium was set as 1.52.
- Wavelength was calculated at recording 535 nm and tracking 650 nm. Such combinations are allowable as recording 535 nm and tracking 780 nm, recording 405 nm and tracking 650 nm and recording 405 nm and tracking 780 nm.

### Case of Three-Layer Laminate

The simulation results in the case of three-layer laminate of dielectric thin film are shown in Tables 1 and 2, and FIG. 9.

**Table 1**

| | Material | Film thickness (nm) |
|---|---|---|
| Third layer in incident direction | TiO₂ | 54.1 |
| Second layer in incident direction | MgF₂ | 83.8 |
| First layer in incident direction | TiO₂ | 54.1 |

**Table 2**

| | Angle (within medium) | |
|---|---|---|
| | 0° | 40° |
| Reflectance at 535 nm | 56.8% | 41.4 % |
| Transmittance at 650 nm | 62.7% | 81.0% |

### Case of Five-Layer Laminate

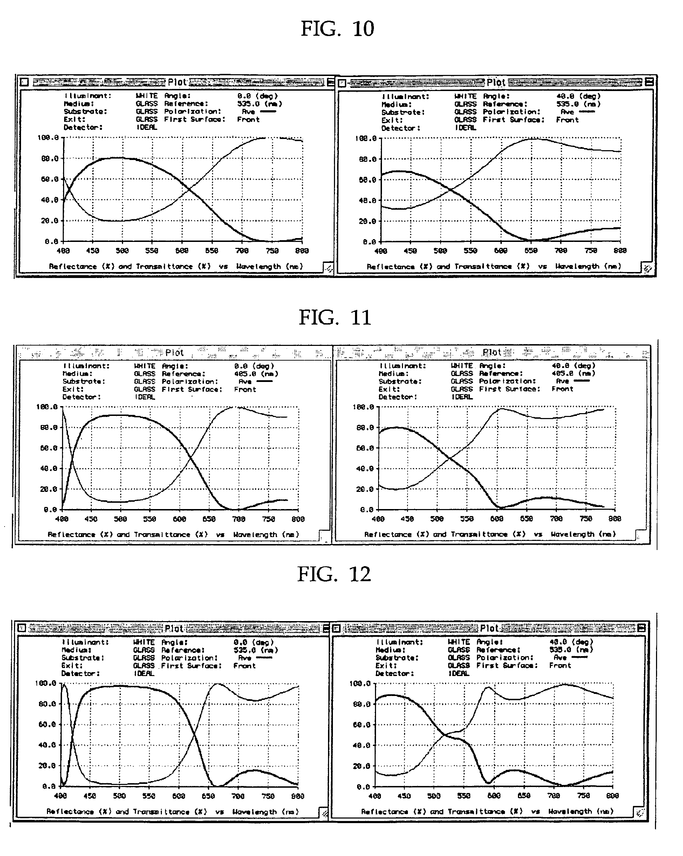

The simulation results in the case of five-layer laminate of dielectric thin film are shown in Tables 3 and 4, and FIG.10.

**Table 3**

| | Material | Film thickness (nm) |
|---|---|---|
| Fifth layer in incident direction | TiO₂ | 63.9 |
| Fourth layer in incident direction | MgF₂ | 62.8 |
| Third layer in incident direction | TiO₂ | 62.6 |
| Second layer in incident direction | MgF₂ | 62.8 |
| First layer in incident direction | TiO₂ | 63.9 |

**Table 4**

| | Angle (within medium) | |
|---|---|---|
| | 0° | 40° |
| Reflectance at 535 nm | 76.9% | 43.5% |
| Transmittance at 650 nm | 70.4% | 98.9% |

### Case of Seven-Layer Laminate

The simulation results in the case of seven-layer laminate of dielectric thin film are shown in Tables 5 and 6, and FIG.11.

**Table 5**

| | Material | Film thickness (nm) |
|---|---|---|
| Seventh layer in incident direction | TiO₂ | 59.4 |
| Sixth layer in incident direction | MgF₂ | 61.3 |
| Fifth layer in incident direction | TiO₂ | 67.0 |
| Fourth layer in incident direction | MgF₂ | 67.3 |
| Third layer in incident direction | TiO₂ | 67.0 |
| Second layer in incident direction | MgF₂ | 61.3 |
| First layer in incident direction | TiO₂ | 59.4 |

**Table 6**

| | Angle (within medium) | |
|---|---|---|
| | 0° | 40° |
| Reflectance at 535 nm | 90.1 % | 44.3 % |
| Transmittance at 650 nm | 81.7% | 90.8% |

### Case of Nine-Layer Laminate

The simulation results in the case of nine-layer laminate of dielectric thin film are shown in Tables 7 and 8, and FIG. 12.

**Table 7**

| | Material | Film thickness (nm) |
|---|---|---|
| Ninth layer in incident direction | TiO₂ | 64.0 |
| Eighth layer in incident direction | MgF₂ | 70.0 |
| Seventh layer in incident direction | TiO₂ | 56.7 |
| Sixth layer in incident direction | MgF₂ | 77.1 |
| Fifth layer in incident direction | TiO₂ | 65.6 |
| Fourth layer in incident direction | MgF₂ | 77.1 |
| Third layer in incident direction | TiO₂ | 56.7 |
| Second layer in incident direction | MgF₂ | 70.0 |
| First layer in incident direction | TiO₂ | 64.0 |

**Table 8**

| | Angle (within medium) | |
|---|---|---|
| | 0° | 40° |
| Reflectance at 535 nm | 96.9% | 47.1% |
| Transmittance at 650 nm | 91.6% | 85.4% |

From the results of the simulation described above, it was confirmed that the laminate of three to nine layers of the dielectric thin film leads to feasible reflection properties and the laminate of seven layers is most preferable in view of well-balanced reflective properties and productivity.

### Example 1

### Preparation of Filter for Optical Recording Medium

### Formation of Colorant-Containing Layer

A base film was initially acquired which being formed from a polycarbonate film of 100 µm thick (product name: Youpilon, by Mitsubishi Gas Chemical Co.) on which polyvinyl alcohol (product name: MP203, by Kuraray Co.) being coated in 1 µm thick.

A coating liquid for colorant-containing layer was then prepared having the following composition by a conventional manner.

| | |
|---|---|
| Red pigment (C.I. Pigment Red 9) | 10 parts by mass |
| Binder resin (polyvinyl alcohol resin ^{*1)}) | 100 parts by mass |
| Water | 700 parts by mass |

| | |
|---|---|
| *1) by Kuraray Co. | |

The coating liquid for colorant-containing layer was then coated onto the base film using a bar coater, followed by drying to form a colorant-containing layer of 3 µm thick.

### Formation of Dielectric Deposition Filter

Initially, a base material film was acquired in which dipentaerythritolhexaacrylate (by Nippon Kayaku Co.) of 0.5 µm thick being coated on a triacetylcellulose film of 100 µm thick (Fujitac 12/3, by Fuji Photo Film Co.).

Then a dielectric deposition filter of three-layer laminate was prepared by way of spattering (Cube, by Unaxis Co.) under a multi-chamber process on the base material film in a similar manner as the simulation of the case of the three-layer laminate.

The filter for optical recording medium of Example 1 was prepared by laminating the base film with the colorant-containing layer and the dielectric deposition filter using an adhesive.

### Example 2

### Preparation of Filter for Optical Recording Medium

The filter for optical recording medium of Example 2 was prepared in the same manner as Example 1 except that a dielectric deposition filter of five-layer laminate was prepared in a similar manner as the simulation of the case of the five-layer laminate.

### Example 3

### Preparation of Filter for Optical Recording Medium

The filter for optical recording medium of Example 3 was prepared in the same manner as Example 1 except that a dielectric deposition filter of seven-layer laminate was prepared in a similar manner as the simulation of the case of the seven-layer laminate.

### Example 4

### Preparation of Filter for Optical Recording Medium

The filter for optical recording medium of Example 4 was prepared in the same manner as Example 1 except that a dielectric deposition filter of nine-layer laminate was prepared in a similar manner as the simulation of the case of the nine-layer laminate.

The filters for optical recording medium of Examples 1 to 4 were measured in terms of reflection properties using a spectral reflectometer (light source: L-5662, photo multi-channel analyzer: PMA-11, both by Hamamatsu Photonics KK). As a result, it was confirmed that the filters for optical recording medium of Examples 1 to 4 can reflect the light of selective wavelength 532 nm at a rate of 30% or more with respect to incident angle within ±40° as shown in FIGs. 3 and 4.

### Example 5

### Preparation of Optical Recording Medium

A substrate of conventional polycarbonate resin of diameter 120 mm and thickness 0.6 mm, which being commercially used for DVD+RW, was employed for the lower substrate. A servo pit pattern was formed on the entire surface of the substrate with track pitch 0.74 µm, groove depth 175 nm and groove width 300 nm.

A reflective film was initially formed on the surface of servo pit pattern of the lower substrate. The material of the reflective film was aluminum (A1). The reflective film Al was formed by a DC magnetron spattering process into 200 nm thick.

The colorant-containing tackiness agent, prepared by mixing the ingredients below, was thickly coated on the reflective film A1 using a dispenser. Ingredients of Colorant-Containing Tackiness Agent

| | |
|---|---|
| Red pigment (C.I. Pigment Red 9) | 10 parts by mass |
| Acrylic tackiness agent | 100 parts by mass |

Then the dielectric deposition filter prepared in Example 1 was stamped into a disc shape of a predetermined size so as to dispose on the lower substrate, the side of base film was laminated to the side of servo pit pattern while adjusting the thickness of the colorant-containing layer to 40 µm thick. Consequently, a filter layer was formed.

The coating liquid of photopolymer of the ingredients below was prepared for the material of the recording layer. Ingredients of Coating Liquid of Photopolymer

Di(urethaneacrylate)oligomer (ALU-351) ^{*1)} 59 parts by mass

| | |
|---|---|
| Isobonyl acrylate | 30 parts by mass |
| Vinylbenzoate | 10 parts by mass |
| Polymerization initiator ^{*2}) | 1 part by mass |

| | |
|---|---|
| *1) by Echo Resins Co. *2) IRGACURE 784, by Ciba Specialty Chemicals K.K. | |

The resulting coating liquid of photopolymer was thickly coated on the filter layer using a dispenser. While an upper substrate made of a polycarbonate resin with diameter 12 cm and thickness 0.6 mm was being pressed onto the photopolymer, the disk edge and the upper substrate were bonded with an adhesive. The disk had a flange portion at its edge to adjust the photopolymer layer to 500 µm thick. Bonding the upper substrate with the flange portion could define the thickness of the photopolymer layer and excessive photopolymer could flow out appropriately. In this way the optical recording medium of Example 5 was prepared.

### Example 6

### Preparation of Optical Recording Medium

The optical recording medium of Example 6 was prepared in the same manner as Example 5, except that the dielectric deposition filter of Example 1 was changed into the dielectric deposition filter of Example 2 and the thickness of the colorant-containing layer was controlled to 30 µm thick.

### Example 7

### Preparation of Optical Recording Medium

The optical recording medium of Example 7 was prepared in the same manner as Example 5, except that the dielectric deposition filter of Example 1 was changed into the dielectric deposition filter of Example 3 and the thickness of the colorant-containing layer was controlled to 20 µm thick.

### Example 8

### Preparation of Optical Recording Medium

The optical recording medium of Example 8 was prepared in the same manner as Example 5, except that the dielectric deposition filter of Example 1 was changed into the dielectric deposition filter of Example 4 and the thickness of the colorant-containing layer was controlled to 10 µm thick.

### Example 9

### Preparation of Optical Recording Medium

The optical recording medium of Example 9 was prepared in the same manner as Example 7, except that the second gap layer was provided between the reflective film and the filter layer. The second gap layer was a polycarbonate film of 100 µm thick, which was adhered using a UV-curable resin.

### Comparative Example 1

### Preparation of Optical Recording Medium

The optical recording medium of Comparative Example 1 was prepared in the same manner as Example 7, except that no filter layer, i.e. the colorant-containing layer and the dielectric deposition layer, was provided.

### Comparative Example 2

### Preparation of Optical Recording Medium

The optical recording medium of Comparative Example 2 was prepared in a similar manner as Example 8, in which the filter layer was same with that of Example 1 except for no colorant-containing layer being formed on the dielectric deposition filter.

### Performance Evaluation

The resulting optical recording media of Examples 5 to 9 and Comparative Examples 1 to 2 were mounted to an optical recording and reproducing apparatus as shown in FIG. 8, then information was recorded, and possible multiple-recording times were measured. The results are shown in Table 9.

**Table 9**

| | number of dielectric thin films | thickness of colorant containing layer (mm) | possible multiple-recording times |
|---|---|---|---|
| Ex. 5 | 3 | 40 | 15 to 30 |
| Ex. 6 | 5 | 30 | 30 to 150 |
| Ex. 7 | 7 | 20 | 50 to 250 |
| Ex. 8 | 9 | 10 | 80 to 300 |
| Ex. 9 | 7 | 20 | 50 to 250 |
| Com. Ex. 1 | 0 | 0 | 0 to 1 |
| Com. Ex. 2 | 9 | 0 | 0 to 1 |

The results of Table 9, in comparison between Examples 5 to 9 and Comparative Examples 1 to 2, demonstrate that the combination of the colorant-containing layer and the dielectric deposition film may make possible the multiple high density recording that is the final target of optical recording media of hologram type, and also it is confirmed that the adjustment of intensities of informing and reproducing lights allows some variation.

### Industrial Applicability

The inventive filters for optical recording medium may be appropriately used for wavelength-selective reflection films in optical recording media of hologram type that can inhibit noise without shifting the selective reflection wavelength even when the incident angle is variable and record images with higher density over the prior art.

The inventive optical recording media may be widely used for various optical recording media of hologram type that can inhibit noise without shifting the selective reflection wavelength even when the incident angle is variable and record images with higher density over the prior art.

## Claims

1. A filter for optical recording medium, comprising a colorant-containing layer that comprises a colorant of at least one of pigments and dyes.

2. The filter for optical recording medium according to claim 1, wherein the colorant is a red pigment.

3. The filter for optical recording medium according to claim 2, wherein the red pigment exhibits a transmittance of 33 % or less to the light of 532 run and a transmittance of 66 % or more to the light of 655 nm.

4. The filter for optical recording medium according to any one of claims 1 to 3, comprising a dielectric deposition layer that is a laminate of multiple dielectric thin films having different refractive indices.

5. The filter for optical recording medium according to claim 4, wherein the dielectric deposition layer is a multiple film laminate that comprises alternately a dielectric thin film having a high refractive index and a dielectric thin film having a low refractive index.

6. The filter for optical recording medium according to claim 4 or 5, wherein the dielectric deposition layer is a laminate of 2 to 20 dielectric thin films.

7. The filter for optical recording medium according to any one of claims 4 to 6, comprising the dielectric deposition layer on the colorant-containing layer.

8. The filter for optical recording medium according to any one of claims 1 to 7, wherein a light having a first wavelength is transmitted and a light having a second wavelength different from the first wavelength is reflected.

9. The filter for optical recording medium according to claim 8, wherein the first wavelength is 350 nm to 600 nm, and the second wavelength is 600 nm to 900 nm.

10. The filter for optical recording medium according to any one of claims 1 to 9, wherein the transmittance is 50% or more to the light of 655 nm and the reflectance is 30% or more to the light of 532 nm in a range of incident angle ±40°.

11. The filter for optical recording medium according to any one of claims 1 to 10, utilized as a selective reflection film of optical recording medium to record information on the basis of holography.

12. The filter for optical recording medium according to claim 11, wherein a coaxial light beam of an informing light and a reference light is irradiated onto the optical recording medium, which records information by use of an interference pattern between the informing light and the reference light.

13. An optical recording medium, comprising an upper substrate, a lower substrate, a recording layer on the lower substrate to record information on the basis of holography, and a filter layer between the lower substrate and the recording layer,
wherein the filter layer comprises a colorant-containing layer that comprises a colorant of at least one of pigments and dyes.

14. The optical recording medium according to claim 13, wherein the colorant is a red pigment.

15. The optical recording medium according to claim 14, wherein the red pigment exhibits a transmittance of 33% or less to the light of 532 nm and a transmittance of 66% or more to the light of 655 nm.

16. The optical recording medium according to any one of claims 13 to 15,
wherein the filter layer comprises a dielectric deposition layer that is a laminate of multiple dielectric thin films having different refractive indices.

17. The optical recording medium according to claims 16, wherein the dielectric deposition layer is a multiple film laminate that comprises alternately a dielectric thin film having a high refractive index and a dielectric thin film having a low refractive index.

18. The optical recording medium according to claim 16 or 17, wherein the dielectric deposition layer is a laminate of 2 to 20 dielectric thin films.

19. The optical recording medium according to any one of claims 16 to 18,
wherein the filter layer comprises the dielectric deposition layer on the colorant-containing layer.

20. The optical recording medium according to any one of claims 13 to 19,
wherein the filter layer transmits a light having a first wavelength and reflects a light having a second wavelength different from the first wavelength.

21. The optical recording medium according to claim 20, wherein the first wavelength is 350 nm to 600 nm, and the second wavelength is 600 nm to 900 nm.

22. The optical recording medium according to any one of claims 13 to 21,
wherein the filter layer has a transmittance of 50% or more to the light of 655 nm and a reflectance of 30 % or more to the light of 532 nm in a range of incident angle ±40°.

23. The optical recording medium according to any one of claims 13 to 22,
wherein the substrate has a servo pit pattern.

24. The optical recording medium according to any one of claims 23, wherein a reflective film is provided on the servo pit pattern.

25. The optical recording medium according to claim 24, wherein the reflective film is of metal.

26. The optical recording medium according to claim 24 or 25, wherein a first gap layer is provided between the filter layer and the reflective layer in order to smoothen the surface of the lower substrate.

27. The optical recording medium according to any one of claims 13 to 26,
wherein a second gap layer is provided between the recording layer and the filter layer.

28. A method for producing an optical recording medium that comprises an upper substrate, a lower substrate, a recording layer on the lower substrate to record information on the basis of holography, and a filter layer between the lower substrate and the recording layer,
wherein the method comprising:
processing a filter for optical recording medium into a shape of an optical recording medium, and
laminating the processed filter to the lower substrate to form a filter layer,
wherein the filter for optical recording medium is any one according to claims 1 to 12.

29. An optical recording method comprising:
irradiating a coaxial light beam of an informing light and a reference light onto an optical recording medium, and
recording information on the recording layer by use of an interference pattern between the informing light and the reference light,
wherein the optical recording medium is any one according to claims 13 to 27.

30. An optical reproducing method comprising:
irradiating a reference light onto an interference pattern, and
reproducing information,
wherein the interference pattern is recorded onto a recording layer by the optical recording method according to the claim 29.
